# EUROPÄISCHE PATENTSCHRIFT

(11) **EP 0 556 759 B1**
(45) Veröffentlichungstag und Bekanntmachung des Hinweises auf die Patenterteilung: **15.10.1997**
(21) Anmeldenummer: 93102310.5
(22) Anmeldetag: 15.02.1993
(51) Int. Cl.: G01F 3/22, F16H 21/20

(54) **Kurbelvorrichtung**
Cam device
Dispositif à came

(30) Priorität: 20.02.1992 DE 4205135
(43) Veröffentlichungstag der Anmeldung: 25.08.1993
(73) Patentinhaber: G. Kromschröder Aktiengesellschaft, D-49018 Osnabrück (DE)
(72) Erfinder: Temme, Hans-Werner, W-4531 Lotte (DE)
(74) Vertreter: Zenz, Joachim Klaus, Dipl.-Ing.

(56) Entgegenhaltungen:
- EP-A- 0 123 320
- EP-A- 0 134 939
- EP-A- 0 257 259
- AU-B- 411 132
- GB-A- 1 578 824
- US-A- 3 675 498

## Beschreibung

Die Erfindung betrifft eine Kurbelvorrichtung mit einem um eine Achse drehbaren Teil, mindestens einem mit dem drehbaren Teil verbundenen Kurbelteil und einem ersten Exzenter zum Verstellen der beiden Teile relativ zueinander, wobei der erste Exzenter drehbar mit einem der beiden Teile verbunden ist und einen exzentrisch zu seiner Drehachse angeordneten ersten Zapfen aufweist, der in einen ersten Schlitz des anderen der beiden Teile eingreift.

Das um eine Achse drehbare Teil kann eine Welle sein. Auch kann es sich um ein zweites Kurbelteil handeln. Letzteres ist beispielsweise bei Getrieben für Balgengaszählern der Fall. Hier ist das eine Kurbelteil mit den bewegbaren Wänden der Zählerkammern verbunden, während das andere Kurbelteil die den Zählerkammern zugeordneten Schieber steuert.

Eine Vorrichtung der eingangs genannten Art ist aus der DE-OS 36 23 596 bekannt. Das Kurbelteil ist koaxial auf das drehbare Teil aufgesteckt, wobei mit dem Exzenter eine Verstellung in Umfangsrichtung durchgeführt werden kann, um die Winkelposition der beiden Teile relativ zueinander zu justieren. Wesentliche Anwendung findet diese Konstruktion auf Getriebe von Balgengaszählern, wobei die Verstellung dazu dient, die Voreilung der Schieber gegenüber den bewegbaren Wänden der Zählerkammern zu justieren. Durch diese Voreilung wird der Zähler so eingestellt, daß der Meßfehler über dem gesamten Meßbereich, also unabhängig von der Liefermenge, im wesentlichen konstant bleibt.

Insoweit hat sich die bekannte Vorrichtung bewährt. Allerdings beschränkt sich die Verstellbarkeit auf die Umfangsrichtung.

Aus der US-A-3,675,498 ist ein Pumpenantrieb mit verstellbarem Hub bekannt, bei dem eine erste Kreisscheibe exzentrisch mit einer Welle verbunden ist. Sie lagert auf ihrem Umfang exzentrisch eine zweite Kreisscheibe, die den eigentlichen Nockenantrieb für die Pumpe bildet. Beide Scheiben sind über Verstellelemente relativ zur Welle verdrehbar, wobei die Verstellelemente jeweils mit einem radialen Zapfen in einen kulissenartigen Schlitz der Welle eingreifen. Die gewünschte Verstellung wird dadurch bewirkt, daß man die Welle in Axialrichtung verschiebt. Zwar kommt es zwischen den beiden Scheiben zu einer Winkelverstellung, jedoch wird im Endeffekt lediglich der Hub des Nockenantriebs verändert. Jeder Hublänge ist eine definierte Position der beiden Kreisscheiben relativ zueinander zugeordnet.

Der Erfindung liegt die Aufgabe zugrunde, eine Vorrichtung der eingangs genannten Art zu schaffen, die eine variable Verstellung der beiden Teile relativ zueinander zuläßt.

Zur Lösung dieser Aufgabe weist die eingangs genannte Vorrichtung erfindungsgemäß die Merkmale im kennzeichnenden Teil des Patentanspruchs 1 auf.

Wird eine Verstellung durch Betätigung eines der Exzenter durchgeführt, so bildet der andere Exzenter den Drehpunkt für die Relativbewegung der beiden Teile. Durch entsprechende Steuerung der beiden Exzenter läßt sich nicht nur - wie bisher - eine Verstellung in Umfangsrichtung, also eine Justierung der relativen Winkelposition durchführen, sondern es kann auch das Kurbelteil, bezogen auf die Achse des drehbaren Teiles, in Radialrichtung verstellt werden. Dies bedeutet, daß der Kurbelhub justierbar ist. Jede der beiden Justierungen kann für sich alleine vorgenommen werden. Auch ist eine überlagernde Verstellung möglich, bei der gleichzeitig die Winkelposition und der Hub verändert werden. Die Verstellungen lassen sich denkbar einfach durchführen. Auch arbeitet die Vorrichtung mit relativ wenigen Bauelementen, so daß sie einfach im Aufbau und in der Montage ist.

Die Feinheit der Verstellung durch jeden Exzenter hängt ab von dem Abstand des Zapfens zur Exzenter-Drehachse. Durch entsprechende Wahl dieses Maßes kann die gewünschte Feinheit eingestellt werden, und zwar individuell für jeden der beiden Exzenter.

Eine wesentliche Anwendung der Erfindung liegt auf dem Gebiet der Balgengaszähler. Durch die Verstellung in Umfangsrichtung wird, wie oben erläutert, das Voreilen der Schieber gegenüber den bewegbaren Wänden der Zählerkammern justiert, um den Fehler über dem Meßbereich konstant zu halten. Die Absolutgröße des Fehlers hängt ab von den Abweichungen des Zählerinhalts vom Sollmaß. Eine diesbezügliche Justierung und Eichung erfolgte bisher über den Zählwerksantrieb, wobei dessen Übersetzung durch den Einbau unterschiedlicher Justierradsätze eingestellt wurde. Dies ermöglichte eine Justierung im Bereich von +/- 5%. Darüberhinausgehende Inhaltsabweichungen führten zu Ausschuß.

Mit der erfindungsgemäßen Verstellung des Kurbelradius' läßt sich der Hub der bewegbaren Wände der Zählerkammern und damit der Zählerinhalt in wesentlich größeren Grenzen als +/- 5% variieren, so daß also die Produktion von Ausschuß aufgrund von Inhaltsabweichungen vermieden wird. Die Justierung ist nicht nur exakt, sondern auch äußerst einfach und in keiner Weise vergleichbar mit dem Aufwand, der durch unterschiedliche Justierradsätze bedingt wurde. Auch läßt sich die Justierung automatisieren.

Ferner bietet sich die Möglichkeit, größere Toleranzen der Bauteile zuzulassen. Dies ist vor allen Dingen bei mechanisch temperaturkompensierten Zählern von sehr großer Bedeutung, da die Kompensationselemente, bei denen es sich vorwiegend um Bimetalle handelt, in der Regel große Toleranzen aufweisen.

Die Kraftübertragung zwischen dem drehbaren Teil und dem Kurbelteil erfolgt über die beiden Exzenter. Da deren Zapfen mit Schlitzen zusammenarbeiten, muß die Anordnung so getroffen werden, daß die Belastungen während des Betriebes keine unerwünschten Verstellungen hervorrufen können. Dies kann in gewissem Umfang durch die Anordnung und Ausrichtung der beiden Schlitze geschehen. Vor allem dienen hierzu der dritte Zapfen und der dritte Schlitz. Sie verhindern unerwünschte Verstellbewegungen, wobei darüber hinaus die bevorzugte Möglichkeit besteht, den dritten Schlitz entsprechend der gewünschten Verstellcharakteristik zu formen. Besonders vorteilhaft ist eine Anordnung, bei der der dritte Schlitz etwa mitten zwischen den beiden Exzentern angeordnet ist und etwa senkrecht zu einer gedachten, die beiden Exzenter verbindenden Geraden verläuft.

Wesentlich ist ferner, daß der erste Schlitz mit dem zweiten Schlitz etwa auf einer gemeinsamen Geraden liegt. Dies ist nicht nur fertigungstechnisch vorteilhaft, sondern ermöglicht auch günstige Bewegungsabläufe bei den Justierungen. Letzteres gilt auch für das Merkmal, daß einer der beiden Exzenter etwa zentral zur Achse des drehbaren Teils angeordnet ist, da hier die Verstellung der Winkelposition allein durch Betätigen des anderen Exzenters bewirkt wird.

Eine bevorzugte Ausführungsform der Erfindung zeichnet sich dadurch aus, daß das Kurbelteil mit einem Abgriffelement versehen ist und daß das Abgriffelement mit den beiden Exzentern ein etwa rechtwinkliges Dreieck definiert, wobei es zwischen dessen Katheten liegt. Die beiden Justierbewegungen des Abgriffelementes stehen hier im wesentlichen senkrecht aufeinander. Fluchtet einer der Exzenter mit der Achse des drehbaren Teils, so führt ein Verstellen dieses Exzenters zu einer praktisch radialen Justierbewegung des Abgriffelements.

Die Vorrichtung nach der Erfindung eignet sich in besonders günstiger Weise zur Kompensation von Temperaturänderungen, wobei eine Temperaturkompensationseinrichtung vorgesehen wird, die zwischen dem Abgriffelement und dem Kurbelteil wirksam ist. Die Temperaturkompensationseinrichtung kann beispielsweise aus einem U-förmig gebogenen Bimetallstreifen bestehen, der mit seinem einen Ende am Kurbelteil befestigt ist und an seinem anderen Ende das Abgriffelement trägt. Vorteilhaft hingegen ist es, daß die Temperaturkompensationseinrichtung einen Schwenkarm aufweist, der an dem Kurbelteil angelenkt ist und das Abgriffelement trägt, wobei ein an dem Kurbelteil befestigtes Bimetallelement an dem Schwenkarm angreift und diesen im wesentlichen radial zur Achse des drehbaren Teils einstellt:

Aus Platzgründen ist es besonders günstig, daß das Bimetallelement spiralförmig ausgebildet ist und mit einem im wesentlichen radial zu seiner Spiralachse vorstehenden Ende an dem Schwenkarm angreift. Diese Konstruktion bietet außerdem den Vorteil einer einfachen Einstellung der Empfindlichkeit, und zwar dadurch, daß das spiralförmige Bimetallelement in Richtung seines vorstehenden Endes bezüglich des Schwenkarms einstellbar ist. Dadurch ändert sich die Länge des als Hebel zu betrachtenden Bimetallelementes.

In Weiterbildung der Erfindung wird vorgeschlagen, daß das Kurbelteil und das drehbare Teil Eingriffelemente zur Herstellung einer bajonettverschlußartigen Verriegelung aufweisen. Dies ermöglicht eine günstige Montage durch einfaches Zusammenstecken der beiden Teile. Dabei ist es besonders vorteilhaft, daß einer der beiden Teile radial über den anderen vorsteht und radial nach innen gerichtete Ansätze aufweist, die mit zugeordneten Flächenbereich des anderen Teils in Eingriff stehen, wobei sich an die Flächenbereiche in gemeinsamer Umfangsrichtung je eine Durchgangsöffnung für den Durchtritt des zugeordneten Ansatzes anschließt. Die Flächenbereiche gestatten in ihrer Ebene beliebig gerichtete zweitdimensionale Bewegungen.

Aus konstruktiven Gründen hat es sich als vorteilhaft erwiesen, die beiden Teile scheibenförmig auszubilden.

Eine besonders einfache Fertigung wird dadurch erzielt, daß die beiden Exzenter gemeinsam in einem der beiden Teile, vorzugsweise im Kurbelteil angeordnet sind.

Vorzugsweise trägt jeder Exzenter einen als radialen Zeiger ausgebildeten Betätiger, der elastisch verstellbar mit einer Skala desjenigen Teils in Eingriff steht, mit dem der Exzenter drehbar verbunden ist. Der Zeiger ermöglicht in Verbindung mit der Skala eine optische Überwachung der Justierung. Außerdem erhöht der Eingriff zwischen Zeiger und Skala die ohnehin vorhandene Selbsthemmung des zugehörigen Exzenters.

Die Erfindung wird im folgenden anhand eines bevorzugten Ausführungsbeispiels im Zusammenhang mit der beiliegenden Zeichnung näher erläutert. Die Zeichnung zeigt in:

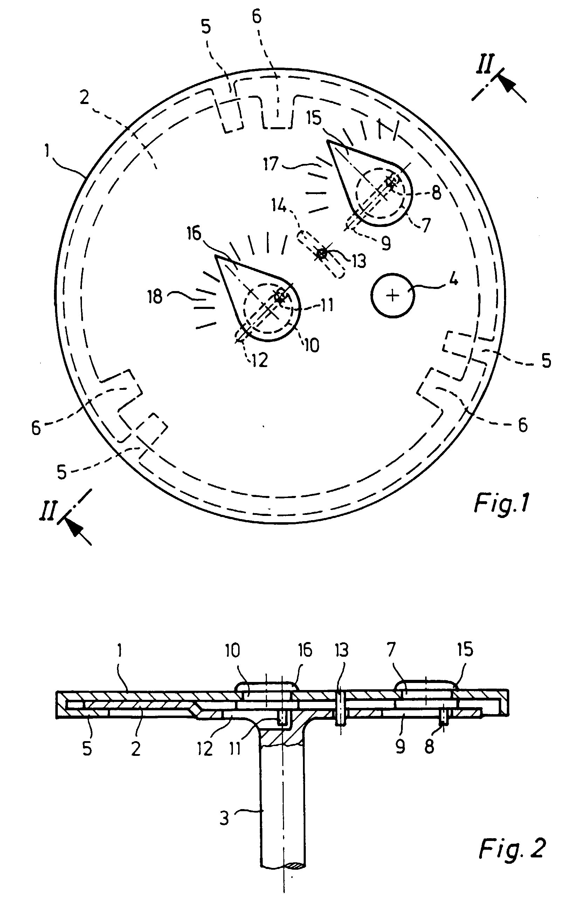

- Fig. 1: einen Grundriß einer erfindungsgemäßen Kurbelvorrichtung;
- Fig. 2: einen Schnitt entlang der Linie II-II in Fig. 1;
- Fig. 3: eine schematische Darstellung der Bewegungsverhältnisse.

Die Kurbelvorrichtung nach dem Ausführungsbeispiel weist ein Kurbelteil 1 sowie ein mit diesem verbundenes drehbares Teil 2 auf. Letzteres ist einstückig mit einer Welle 3 verbunden. Das Kurbelteil 1 trägt ein Abgriffelement 4 in Form eines Zapfens, der im vorliegenden Fall an die bewegbaren Wände der Zählerkammern eines Balgengaszählers anschließbar ist. Die Welle 3 dient dazu, diese Bewegung auf die Schieber der Zählerkammern sowie auf das Zählwerk zu übertragen. Hierzu kann die Welle 3 ein weiteres Kurbelteil tragen. Auch kann das drehbare Teil 2 seinerseits einen Kurbelzapfen aufweisen.

Die Teile 1 und 2 sind scheibenförmig ausgebildet und durch eine bajonettverschlußartige Verriegelung miteinander verbunden. Das Kurbelteil 1 steht radial über das drehbare Teil 2 vor und weist radial nach innen gerichtete Ansätze 5 auf, die zugeordnete Flächenbereiche des drehbaren Teils 2 untergreifen. Durchgangsöffnungen 6 im drehbaren Teil 2 ermöglichen ein Zusammenstecken der bajonettverschlußartigen Verriegelung. Diese Verriegelung gestattet in begrenztem Umfang zweidimensionale Relativbewegungen zwischen den Teilen 1 und 2.

Die Vorrichtung weist einen ersten Exzenter 7 auf, der drehbar mit dem Kurbelteil 1 verbunden ist und einen exzentrisch zu seiner Drehachse angeordneten ersten Zapfen 8 trägt. Dieser greift in einen ersten Schlitz 9 des drehbaren Teiles 2 ein. Ferner ist ein zweiter Exzenter 10 vorgesehen, der ebenfalls drehbar mit den Kurbelteil 1 verbunden ist und einen exzentrisch zu seiner Drehachse angeordneten zweiten Zapfen 11 trägt. Der zweite Zapfen 11 greift in einen zweiten Schlitz 12 des drehbaren Teils 2 ein. Der Kurbelteil 1 trägt außerdem einen dritten Zapfen 13, der in Eingriff mit einem dritten Schlitz 14 des drehbaren Teils 2 steht. Dabei ist die Anordnung so getroffen, daß die beiden Exzenter 7 und 10 zusammen mit dem Abgriffelement 4 einen rechten Winkel definieren. Die Schlitze 9 und 12 liegen auf einer gemeinsamen Geraden, die die beiden Exzenter miteinander verbindet. Rechtwinklig zu dieser Geraden verläuft zwischen den beiden Exzentern der dritte Schlitz 14. Beide Exzenter sind drehbar in ein und demselben Teil gelagert, wobei der Exzenter 10 mit der Achse des drehbaren Teils fluchtet.

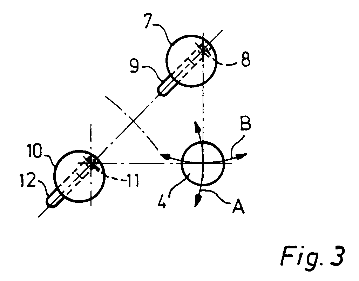

Die Bewegungsverhältnisse dieser Anordnung ergeben sich am besten aus Fig. 3. Dem dritten Schlitz 14 des drehbaren Teiles 2, in den der dritte Zapfen 13 des Kurbelteils 1 eingreift, kommt die Aufgabe zu, die Charakteristik der Relativbewegung zwischen den Teilen 1 und 2 zu definieren. Wird der erste Exzenter 7 betätigt, so bildet der Zapfen 11 des zweiten Exzenters 10 den Drehpunkt der Relativbewegung. Das Abgriffelement 4 führt also eine Bewegung durch, die durch einen Doppelpfeil A in Fig. 3 angedeutet ist. Bezogen auf die Drehachse der Welle 3 handelt es sich um eine praktisch reine Umfangsbewegung, so daß also die Winkelposition des Abgriffelementes 4 bezüglich des drehbaren Teils 2 verstellt wird. Betätigt man hingegen den zweiten Exzenter 10, so dient der Zapfen 8 des ersten Exzenters 7 als Drehpunkt. Die daraus resultierende Bewegung des Abgriffelementes 4 ist durch einen Doppelpfeil B in Fig. 3 angedeutet. Bezogen auf die Drehachse der Welle 3 handelt es sich praktisch um eine reine Radialbewegung, wodurch der Kurbelhub des Abgriffelementes 4, bezogen auf die Drehachse der Kurbelvorrichtung, verstellt wird.

Durch die Verstellung der Winkelposition, also durch die Betätigung des ersten Exzenters 7 wird die Voreilung der Schieber des Balgengaszählers, bezogen auf die bewegbaren Wände der Zählerkammern, justiert, was zu einer entsprechenden Streckung der Fehlerkurve führt. Eine Verstellung des zweiten Exzenters 10 bewirkt einen Ausgleich eines etwaigen Inhaltsfehlers durch Änderung des Hubes der bewegbaren Wände; der Zähler wird justiert, d.h. die Fehlerkurve wird an die Nullinie herangeführt. Überlagerungen der beiden Einstellbewegungen sind ohne weiteres möglich.

Zur manuellen Verstellung ist der erste Exzenter 7 mit einem Betätiger 15 versehen. Gleichermaßen weist der zweite Exzenter 10 einen Betätiger 16. Die Betätiger 15 und 16 sind als Zeiger ausgebildet und arbeiten mit zugeordneten Skalen 17 bzw. 18 zusammen, um eine optische Überwachung der jeweiligen Einstellung zu ermöglichen. Dabei wird ein elastischer Eingriff zwischen Zeiger und Skala (Vorsprünge/Vertiefungen) ermöglicht, um die selbsthemmende Wirkung der Exzenter zu verstärken.

Im Rahmen der Erfindung sind durchaus Abwandlungsmöglichkeiten gegeben. So kann das drehbare Teil 2 mit einem weiteren Kurbelteil verbunden sein, wobei ebenfalls eine Relativverstellbarkeit in Umfangsrichtung und/oder Radialrichtung vorgesehen ist. Ferner kann die räumliche Zuordnung der beiden Exzenter zueinander und zum Abgriffelement geändert werden. Gleiches gilt für den ersten und zweiten Schlitz.

Beide Exzenter können ohne weiteres im drehbaren Teil gelagert werden, wobei sich die zugeordneten Schlitze im Kurbelteil befinden. Auch besteht die Möglichkeit, den einen Exzenter im drehbaren Teil und den anderen im Kurbelteil zu lagern. In jedem Falle kann die Zuordnung des dritten Zapfens 13 und des dritten Schlitzes 14 zu den beiden Teilen 1 und 2 frei gewählt werden. Wie bereits erwähnt, bestimmt die Form des dritten Schlitzes 14 die Verstellcharakteristik der Vorrichtung. Sie kann also an die jeweiligen Gegebenheiten angepaßt werden.

Bezüglich der Verriegelung zwischen dem Kurbelteil 1 und dem drehbaren Teil 2 sind Ausführungsformen denkbar, die von der bajonettverschlußartigen Konstruktion abweichen, sofern die beiden Teile mindestens zweidimensional in jeder Richtung relativ zueinander verschiebbar sind. Eine Verriegelung ist auch mittels der beiden Exzenter möglich. Die Betätiger 15 und 16 können auf ihre Anzeigefunktion beschränkt werden, wenn die Verstellung mit anderen Mitteln durchgeführt wird, beispielsweise auf automatischem Wege durch zentralen Eingriff eines Werkzeugs.
Nicht dargestellt in der Zeichnung ist die erfindungsgemäße Temperaturkompensationseinrichtung, bei der das Abgriffelement 4 an einem an dem Kurbelteil angelenkten Schwenkarm sitzt, der von einem spiralförmigen Bimetallelement derart verstellt wird, daß sich das Abgriffelement im wesentlichen radial zur Achse des drehbaren Teils 2 bewegt.

## Patentansprüche

1. Kurbelvorrichtung mit einem um eine Achse drehbaren Teil (2), mindestens einem mit dem drehbaren Teil verbundenen Kurbelteil (1) und einem ersten Exzenter (7) zum Verstellen der beiden Teile relativ zueinander, wobei der erste Exzenter drehbar mit einem der beiden Teile verbunden ist und einen exzentrisch zu seiner Drehachse angeordneten ersten Zapfen (8) aufweist, der in einen ersten Schlitz (9) des anderen der beiden Teile eingreift,
**dadurch gekennzeichnet**,
daß ein zweiter Exzenter (10) zum Verstellen der beiden Teile relativ zueinander vorgesehen ist, wobei der zweite Exzenter ebenfalls drehbar mit einem der beiden Teile verbunden ist und einen exzentrisch zu seiner Drehachse angeordneten zweiten Zapfen (11) aufweist, der in einen zweiten Schlitz (12) des anderen der beiden Teile eingreift,
daß eines der beiden Teile (1, 2) einen dritten Zapfen (13) trägt, der in einen dritten Schlitz (14) des anderen der beiden Teile eingreift, wobei der dritte Schlitz die Verstellung des einen Teils relativ zum anderen Teil begrenzt, und
daß der erste Schlitz (9) mit dem zweiten Schlitz (12) etwa auf einer gemeinsamen Geraden liegt.

2. Kurbelvorrichtung nach Anspruch 1, dadurch gekennzeichnet, daß der dritte Schlitz (14) entsprechend der gewünschten Verstellcharakteristik geformt ist.

3. Kurbelvorrichtung nach Anspruch 2, dadurch gekennzeichnet, daß der dritte Schlitz (14) etwa mitten zwischen den beiden Exzentern (7, 10) angeordnet ist und etwa senkrecht zu einer gedachten, die beiden Exzenter verbindenden Geraden verläuft.

4. Kurbelvorrichtung nach einem der Ansprüche 1 bis 3, dadurch gekennzeichnet, daß einer der beiden Exzenter (7, 10) etwa zentral zur Achse des drehbaren Teils (2) angeordnet ist.

5. Kurbelvorrichtung nach einem der Ansprüche 1 bis 4, dadurch gekennzeichnet, daß das Kurbelteil (1) mit einem Abgriffelement (4) versehen ist und daß das Abgriffelement mit den beiden Exzentern (7, 10) ein etwa rechtwinkliges Dreieck definiert, wobei es zwischen dessen Katheten liegt.

6. Kurbelvorrichtung nach Anspruch 5, gekennzeichnet durch eine Temperaturkompensationseinrichtung, die zwischen dem Abgriffelement (4) und dem Kurbelteil (1) wirksam ist und vorzugsweise einen Schwenkarm aufweist, der an dem Kurbelteil (1) angelenkt ist und das Abgriffelement (4) trägt, wobei ein an dem Kurbelteil befestigtes Bimetallelement an dem Schwenkarm angreift und diesen im wesentlichen radial zur Achse des drehbaren Teils (2) einstellt.

7. Kurbelvorrichtung nach Anspruch 6, dadurch gekennzeichnet, daß das Bimetallelement spiralförmig ausgebildet ist und mit einem im wesentlichen radial zu seiner Spiralachse vorstehenden Ende an dem Schwenkarm angreift, wobei es vorteilhafterweise in Richtung seines vorstehenden Endes bezüglich des Schwenkarms einstellbar ist.

8. Kurbelvorrichtung nach einem der Ansprüche 1 bis 7, dadurch gekennzeichnet, daß das Kurbelteil (1) und das drehbare Teil (2) Eingriffelemente zur Herstellung einer bajonettverschlußartigen Verriegelung aufweisen, wobei vorteilhafterweise einer der beiden Teile (1, 2) radial über den anderen vorsteht und radial nach innen gerichtete Ansätze (5) aufweist, die mit zugeordneten Flächenbereichen des anderen teils im Eingriff stehen, wobei sich an die Flächenbereiche in gemeinsamer Umfangsrichtung je eine Durchgangsöffnung (6) für den Durchtritt des zugeordneten Ansatzes anschließt.

9. Kurbelvorrichtung nach einem der Ansprüche 1 bis 8, dadurch gekennzeichnet, daß die beiden Teile (1, 2) scheibenförmig ausgebildet sind, wobei vorteilhafterweise die beiden Exzenter (7, 10) gemeinsam in einem der beiden Teile, vorzugsweise im Kurbelteil (1) angeordnet sind.

10. Kurbelvorrichtung nach einem der Ansprüche 1 bis 9, dadurch gekennzeichnet, daß jeder Exzenter (7, 10) einen als radialen Zeiger ausgebildeten Betätiger (15, 16) trägt, der elastisch verstellbar mit einer Skala (17, 18) desjenigen Teils (1 oder 2) in Eingriff steht, mit dem der Exzenter drehbar verbunden ist.

## Claims

1. Cam device with a part (2) rotatable about an axis, at least one cam part (1) connected to said rotatable part and a first eccentric cam (7) to adjust the two parts relative to each other, the first eccentric cam being rotatably connected to one of the two parts and exhibiting a first pivot (8) arranged eccentrically to its axis of rotation, said first pivot engaging in a first slit (9) of the other of the two parts, characterised in that a second eccentric cam (10) is provided for adjusting the two parts relative to each other, the second eccentric cam also being rotatably connected to one of the two parts and exhibiting a second pivot (11) arranged eccentrically to its axis of rotation, said second pivot engaging in a second slit (12) of the other of the two parts, that one of the two parts (1,2) carries a third pivot (13) which engages in a third slit (14) of the other of the two parts, the third slit limiting adjustment of one part relative to the other part, and that the first slit (9) lies roughly on a straight line with the second slit (12).

2. Cam device according to claim 1, characterised in that the third slit (14) is shaped in accordance with the desired adjustment characteristics.

3. Cam device according to claim 2, characterised in that the third slit (14) is arranged roughly midway between the first two eccentric cams (7, 10) and runs roughly vertically to an imaginary straight line connecting the two eccentric cams.

4. Cam device according to claims 1 through 3, characterised in that one of the two eccentric cams (7, 10) is arranged roughly centrally to the axis of the rotatable part (2).

5. Cam device according to any one of claims 1 through 4, characterised in that the cam part (1) is provided with a pick-up element (4) and that the pick-up element (4) defines, with the two eccentric cams (7,10), a roughly right-angle triangle and lies between the legs of the right angle of said triangle.

6. Cam device according to claim 5, characterised by a temperature compensation device which acts between the pick-up element (4) and the cam part (1) and preferably exhibits a swivel arm which is articulated at the cam part (1) and which carries the pick-up element (4), a bi-metal element mounted on the cam part acting on the swivel arm and adjusting said swivel arm substantially radially to the axis of the rotatable part (2).

7. Cam device according to claim 6, characterised in that the bi-metal element is spiral-shaped and acts, with one of its ends protruding substantially radially to its spiral axis, on the swivel arm, the bi-metal element being adjustable, preferably in the direction of its protruding end, in relation to the swivel arm.

8. Cam device according to any one of claims 1 through 7, characterised in that the cam part (1) and the rotatable part (2) exhibit engaging elements to establish a bayonet lock, one of the two parts (1, 2) advantageously protruding radially above the other and exhibiting dogs (5) which point radially inwards and engage with the relevant surface areas of the other part, the surface sections being followed in each case, in the common circumferential direction, by a passage (6) for the relevant dog.

9. Cam device according any one of claims 1 through 8, characterised in that the two parts (1, 2) are disk-shaped, the two eccentric cams (7,10) advantageously being arranged together in one of the two parts, preferably in the cam part (1).

10. Cam device according to any one of claims 1 through 9, characterised in that each eccentric cam (7, 10) has an activator (15, 16) in the form of a radial pointer which engages in an elastically adjustable manner with a scale (17, 18) of the relevant part (1 or 2) with which the eccentric cam is rotatably connected.

## Revendications

1. Dispositif à came avec un élément (2) mobile pouvant tourner autour d'un axe, au moins un élément à came (1) lié à l'élément mobile et un excentrique (7) pour le réglage des deux éléments relativement l'un par rapport à l'autre, le premier excentrique étant lié de façon mobile à l'un des éléments et présentant un premier pivot (8) disposé excentriquement par rapport à son axe de rotation et qui prend dans une première fente (9) de l'autre des deux éléments, caractérisé par le fait qu'un deuxième excentrique (10) est prévu pour le réglage des deux éléments relativement l'un par rapport à l'autre, le deuxième excentrique étant également lié de façon mobile à l'un des éléments et présentant un deuxième pivot (11) disposé excentriquement par rapport à son axe de rotation et qui prend dans une deuxième fente (12) de l'autre des deux éléments, que l'un des deux éléments (1, 2) porte un troisième pivot (13) qui prend dans une troisième fente (14) de l'autre des deux éléments, la troisième fente limitant le réglage de l'un des éléments par rapport à l'autre élément, et que la première fente (9) se trouve avec la deuxième fente (12) à peu près sur une droite commune.

2. Dispositif à came selon la revendication 1, caractérisé par le fait que la troisième fente (14) a la forme qui correspond aux caractéristiques de réglage souhaitées.

3. Dispositif à came selon la revendication 2, caractérisé par le fait que la troisième fente (14) est disposée à peu près au milieu entre les deux excentriques (7, 10) suivant une ligne qui est à peu près perpendiculaire à une droite imaginaire reliant les deux excentriques.

4. Dispositif à came selon l'une des revendications 1 à 3, caractérisé par le fait que l'un des deux excentriques (7, 10) est disposé à peu près de façon centrale par rapport à l'axe de l'élément mobile (2).

5. Dispositif à came selon l'une des revendications 1 à 4, caractérisé par le fait que l'élément à came (1) est muni d'un élément de prise (4) et que l'élément de prise forme, avec les deux excentriques (7, 10), un triangle rectangulaire et se trouve entre les côtés de l'angle droit de celui-ci.

6. Dispositif à came selon la revendication 5, caractérisé par un dispositif de compensation de température agissant entre l'élément de prise (4) et l'élément à came (1) et présentant, de préférence, un bras orientable articulé à l'élément à came (1) et portant l'élément de prise (4), où un élément bimétallique fixé à l'élément à came agit sur le bras orientable et le règle substantiellement de façon radiale par rapport à l'axe de l'élément mobile (2).

7. Dispositif à came selon la revendication 6, caractérisé par le fait que l'élément bimétallique est conçu sous forme de spirale et agit, avec une extrémité faisant saillie essentiellement de façon radiale par rapport à son axe de spirale, sur le bras orientable, où il est réglable, de préférence en direction de son extrémité faisant saillie, par rapport au bras orientable.

8. Dispositif à came selon l'une des revendications 1 à 7, caractérisé par le fait que l'élément à came (1) et l'élément mobile (2) présentent des éléments d'engrenage pour la formation d'un verrouillage à baïonnette, où, de préférence, l'un des deux éléments (1, 2) fait radialement saillie sur l'autre élément et présente des appendices (5) dirigés radialement vers l'intérieur qui se trouvent en partie engrenés avec des sections de surface affectées de l'autre élément, les sections de surface étant suivies à chaque fois, en direction circonférentielle commune, d'un passage (6) pour l'appendice affecté.

9. Dispositif à came selon l'une des revendications 1 à 8, caractérisé par le fait que les deux éléments (1, 2) sont conçus sous forme de disque, où, de préférence, les deux excentriques (7, 10) sont disposés ensemble avec l'un des deux éléments, de préférence, avec l'élément à came (1).

10. Dispositif à came selon l'une des revendications 1 à 9, caractérisé par le fait que chaque excentrique (7, 10) porte un actionneur (15, 16) conçu sous forme d'aiguille radiale et qui est engrené élastiquement réglable par le cadran (17, 18) de l'élément (1 ou 2) auquel l'excentrique est lié de façon mobile.
